(19) Europäisches Patentamt
European Patent Office
Office européen des brevets

(11) Veröffentlichungsnummer: **0 341 430**
**A1**

# (12) EUROPÄISCHE PATENTANMELDUNG

(21) Anmeldenummer: **89106242.4**

(22) Anmeldetag: **08.04.89**

(51) Int. Cl.4: **B32B 5/22 , B32B 27/12 , D06N 3/12**

(30) Priorität: **07.05.88 DE 3815634**

(43) Veröffentlichungstag der Anmeldung:
**15.11.89 Patentblatt 89/46**

(84) Benannte Vertragsstaaten:
**ES GR**

(71) Anmelder: **Akzo N.V.**
**Postbus 9300 Velperweg 76**
**NL-6800 SB Arnhem(NL)**

(72) Erfinder: **Mähler, Rolf-Dirk**
**Zum Grossen Busch 92**
**D-5600 Wuppertal 11(DE)**

(74) Vertreter: **Fett, Günter**
**Akzo Patente GmbH Kasinostrasse 19 - 23**
**D-5600 Wuppertal 1(DE)**

(54) **Laminate aus textilen Flächengebilden und atmungsaktiven Folien.**

(57) Laminate aus einem Gewebe oder Gewirke und einer wasserundurchlässigen, wasserdampfdurchlässigen Folie werden beansprucht. Die Gewebe oder Gewirke bestehen aus unverstreckten oder teilverstreckten Fäden, und die Laminate besitzen hohe Dehnbarkeit. Nach Verdehnung bleibt die erreichte Form erhalten.

Die Laminate eignen sich besonders gut als Ausgangsmaterial für Zwischenlagen in Schuhen und Handschuhen, wobei hinsichtlich Fertigung und Artikeleigenschaften Vorteile gegenüber bekannten Laminaten resultieren.

EP 0 341 430 A1

# Laminate aus textilen Flächengebilden und atmungsaktiven Folien

Die Erfindung betrifft ein Laminat aus einem Gewebe oder Gewirke und einer wasserundurchlässigen wasserdampfdurchlässigen Folie.

Sie betrifft ferner die Verwendung solcher Laminate als Ausgangsmaterial für die Zwischenschicht in Schuhen oder Handschuhen.

Es ist bekannt, bei der Herstellung von Schuhen oder Handschuhen atmungsaktive Folien zu verwenden. Diese Folien besitzen die Aufgabe, ein angenehmes Tragegefühl zu vermitteln, indem sie einerseits den Transport von Wasserdampf ermöglichen, so daß Körperflüssigkeit wie Schweiß nach Verdunsten von der Haut durch die Folie hindurch an die Umgebung abgegeben werden kann. Andererseits sollen diese Folien undurchlässig gegen flüssiges Wasser sein, so daß beispielsweise Regen nicht durch den Schuh oder Handschuh hindurch auf die Haut gelangen kann. Mit anderen Worten, solche atmungsaktiven Folien müssen wasserundurchlässig, aber wasserdampfdurchlässig sein. Sie können dann als Zwischenlage für Schuhe oder Handschuhe verwendet werden, welche außerdem eine Außenlage und eine Innenlage besitzen, die jeweils z.B. aus Leder oder einem textilen Flächengebilde bestehen können. Folien dieser Art und Schuhe bzw. Handschuhe, die solche Folien enthalten, sind z.B. beschrieben in DE-OS 27 37 756, DE-OS 31 47 202, US-PS 4,520,056, US-PS 4,545,841 und US-PS 4,679,257.

Die Nachteile der Verwendung solcher Folien als solche liegen unter anderem darin, daß sie wegen der Handhabbarkeit und der erforderlichen mechanischen Festigkeit eine gewisse Mindestdicke aufweisen müssen. Sehr dünne Folien können nicht verwendet werden, da die Dehn- und Scheuerbeanspruchung in Schuhen oder Handschuhen eine gewisse mechanische Festigkeit erfordert, die erst bei bestimmten Mindestdicken erreicht wird. Die Verwendung von Folien einer bestimmten Mindestdicke verteuert andererseits den Artikel, da die atmungsaktiven Folien einen nicht zu vernachlässigenden Kostenfaktor im Endartikel darstellen.

Ferner wird durch höhere Foliendicken der Transport von Wasserdampf an die Umgebung verlangsamt.

Es wurde versucht, die genannten Nachteile dadurch zu umgehen, daß man Laminate aus atmungsaktiver Folie und nichtgewebten textilen Flächengebilden, wie z.B. thermisch gebundenen Vliesen einsetzte. Dies ist beispielsweise beschrieben in US-PS 3,510,344, US-PS 3,713,938 und US-PS 4,594,283. Die Nachteile der Verwendung solcher Laminate für die Herstellung von Schuhen oder Handschuhen bestehen darin, daß die nichtgewebten Flächengebilde wie z.B. Vliese nur niedrige Dehnbarkeit besitzen und deshalb die Laminate nicht einstückig mit der Außenlage von Schuhen verbunden und geformt werden können. Das Problem hierbei ist das gleiche, wie es im Fall von Laminaten auftritt, welche Flächengebilde aus vollverstreckten Fäden enthalten und das nunmehr im einzelnen beschrieben wird.

Es wurden bereits auch Laminate aus atmungsaktiven Folien und textilen Geweben und Gewirken eingesetzt. Dies geht u.a. hervor aus EP-A 0 110 627, GB-A 2 114 585, US-PS 4,599,810, DE-OS 27 37 756, DE-OS 31 49 878. In all diesen Fällen bestanden die Gewebe oder Gewirke aus vollverstreckten synthetischen Garnen bzw. Endlosfäden. Der Nachteil dieser Laminate besteht in ihrer verhältnismäßig niedrigen Dehnbarkeit. Diese wirkt sich nachteilig auf den Herstellungsprozeß bei der Schuh- oder Handschuhfertigung aus. Da diese Laminate nur geringe Dehnbarkeit in Längs- und Querrichtung aufweisen, müssen sie zu einzelnen Stücken zugeschnitten werden und mit passenden Stücken der Innenlage verbunden werden. Anschließend werden diese Stücke miteinander vernäht und das Ganze mit der vorgefertigten geformten einstückigen Außenlage verbunden, z.B. über Kleben. Hierdurch wird einerseits die Schuh- bzw. Handschuhherstellung aufwendig, andererseits bilden die Nähte, mit denen die einzelnen Teile aus Laminat und Innenlage verbunden sind, Schwachstellen im Endartikel, durch die Wasser eindringen kann. Vielfach ist es daher nötig, diese Nähte, z.B. durch Versiegelung bzw. Nahtabdichtbänder, abzudichten.

Aufgabe der vorliegenden Erfindung war es daher, die genannten Nachteile bekannter Laminate zu vermeiden und Laminate zur Verfügung zu stellen, welche mit Außenlagen von Schuhen oder Handschuhen einstückig zusammen geformt und verbunden werden können, d. h. ohne daß einzelne vorgefertigte Laminatteile an den Rändern miteinander vernäht werden müssen.

Die Aufgabe wurde gelöst durch Laminate gemäß Oberbegriff von Anspruch 1, die dadurch gekennzeichnet sind, daß das Gewebe oder Gewirke aus unverstreckten oder teilverstreckten Endlosfäden besteht, daß das Laminat bei Raumtemperatur eine Dehnbarkeit in Längs- und in Querrichtung von mindestens 150% besitzt und daß es nach einer Verdehnung in Längs- und/oder Querrichtung um einen Wert zwischen 150% und der Bruchdehnung die erhaltene Form im wesentlichen beibehält. Die Dehnbarkeit bzw. Dehnung wird hierbei bestimmt nach DIN 53 857.

Die erfindungsgemäßen Laminate weisen gegenüber bekannten den Vorteil auf, daß sie einstükkig zusammen mit der Außenlage von Schuhen oder Handschuhen, welche aus Leder oder einem textilen Flächengebilde bestehen kann, geformt und verbunden werden können. Hierzu kann die Außenlage auf das erfindungsgemäße Laminat gelegt und das entstandene Flächengebilde, z.B. über einen Leisten, geformt werden. Die Verbindung von Laminat und Außenlage kann zusammen mit der Formgebung oder in einem separaten Schritt erfolgen, z.B. über vollflächiges Verkleben mittels einer Klebstoffzwischenschicht. Vorzugsweise erfolgt die Verbindung jedoch nur punktweise über einzelne aktivierbare sogenannte Klebepunkte, was unten näher erläutert wird. Die Verbindung zwischen Außenlage und Laminat kann dann in vorteilhafter Weise zusammen mit der Formgebung dadurch erfolgen, daß man den formgebenden Leisten beheizt und so die Klebepunkte aktiviert. Nach Vorliegen des geformten Gebildes aus Außenlage und erfindungsgemäßem Laminat wird die Innenlage, welche im Schuh oder Handschuh dem Fuß bzw. der Hand zugewandt ist, in üblicher Weise in einzelnen zugeschnittenen Stücken aufgebracht und mit dem einstückigen Gebilde aus Außenlage und Laminat verbunden, z.B. durch Verklebung bzw. Vernähen an den Außenrändern.

Die Möglichkeit, die erfindungsgemäßen Laminate einstückig zusammen mit der Außenlage zu formen und zu verbinden, ergibt sich aus der hohen Dehnbarkeit, welche eine Voraussetzung für die Formgebung, z.B. über Leisten, ist. Diese hohe Dehnbarkeit wird durch die Verwendung von unverstreckten oder teilverstreckten Endlosfäden im Gewebe- bzw. Gewirkeanteil des Laminats verursacht. Der Vorteil dieser Formgebung unter Verwendung eines einstückigen Laminats liegt darin, daß die atmungsaktive Folie im Schuh bzw. Handschuh einstückig vorliegt, d.h. daß keine Nähte zwischen einzelnen vorgefertigten Laminatteilen vorhanden sind, durch die Wasser eindringen könnte und daß daher auf Nahtabdichtung bzw. -versiegelung verzichtet werden kann.

Für die erfindungsgemäßen Laminate müssen neben Geweben und Gewirken aus unverstreckten oder teilverstreckten Endlosfäden atmungsaktive Folien verwendet werden, die ihrerseits ebenfalls eine Dehnbarkeit von mindestens 150% in Längs- und in Querrichtung aufweisen und sie müssen wasserundurchlässig, aber wasserdampfdurchlässig sein. Solche Folien sind als solche bekannt, u.a. aus Schriften, welche oben bereits genannt wurden, und aus der EP-A 0 111 360. Unter Folien werden im Zusammenhang mit den erfindungsgemäßen Laminaten flächenhafte, flexible Gebilde verstanden, deren Dicke im Vergleich zu ihrer Länge und Breite sehr gering ist. Solche Artikel werden, wenn sie aus Polymeren bestehen, häufig auch als Filme bezeichnet.

Die Gewebe und Gewirke aus unverstreckten oder teilverstreckten Fäden können durch bekannte Verfahren hergestellt werden, wobei gewährleistet sein muß, daß die Gewebe oder Gewirke eine Dehnbarkeit in Längs- und in Querrichtung von mindestens 150% aufweisen. Dies bedeutet einerseits, daß die verwendeten Fäden eine Längsdehnbarkeit von mindestens 150% aufweisen müssen und daß die Gewebe- bzw. Gewirkeherstellung so durchzuführen ist, daß die Dehnbarkeit nicht unter 150% absinkt. Eine vollständige Weiterverstrekkung während der Herstellung des Gewebes oder Gewirkes, z.B. durch hohe Zugkräfte, muß also vermieden werden. Der Ausdruck "teilverstreckte" Fäden im Zusammenhang mit den erfindungsgemäßen Laminaten bedeutet also, daß eine gewisse Verstreckung bei der Fadenherstellung und/oder der Herstellung des Gewebes bzw. Gewirkes erfolgen darf, jedoch nur in einem Ausmaß, daß die Dehnbarkeit des Flächengebildes nicht unter 150% sinkt. Das Ausmaß der Verstreckung, welches zulässig ist, hängt hierbei unter anderem vom Fadenmaterial ab und kann den textilen Daten der vorgesehenen Endlosfäden entnommen werden, z.B. der Kraft-Dehnungskurve.

Als unverstreckte oder teilverstreckte Fäden im Sinne der Erfindung können auch sogenannte vororientierte (FOY, POY) oder teilweise vororientierte (MOY) Fäden verwendet werden, welche mit hoher Geschwindigkeit, z.B. mit etwa 2000 m/min bis 8000 m/min gesponnen wurden, sofern sie die erforderlichen Dehnungseigenschaften aufweisen bzw. die Herstellung von Laminaten ermöglichen, welche die in Anspruch 1 genannten Dehnungseigenschaften besitzen.

Die Verbindung zwischen Folie und Gewebe bzw. Gewirke in den erfindungsgemäßen Laminaten kann erfolgen durch punktförmige oder flächenhafte Verklebung. Die hierfür ausgewählten Klebstoffe müssen vor allem im Fall flächenhafter Verklebung hydrophil sein, um den Transport von Wasserdampf nicht zu behindern, und sie dürfen die Dehnbarkeit der Laminate nicht unter einen Wert von 150% herabsetzen. Geeignet sind hydrophile geschäumte Kleber auf Polyurethan- oder Acrylatbasis.

Die hohe Dehnbarkeit der erfindungsgemäßen Laminate reicht allein nicht aus, um die Anwendungsvorteile zu erzielen. Vielmehr muß die nach Verdehnung um 150% bis hin zur Bruchdehnung erhaltene Form, d.h. die Länge und Breite des Laminats, im wesentlichen erhalten bleiben, sobald die zur Dehnung angewandte Kraft nicht mehr einwirkt. Andernfalls käme es durch Rückstellkräfte zu Spannungen im Gebilde aus Außenlage und Laminat. Für die erfindungsgemäßen Laminate können also keine elastischen ("stretch") Fäden verwendet werden, welche zwar hohe Dehnbarkeit aufweisen,

die aber, sobald keine Dehnkraft mehr einwirkt, die Ausgangslänge wieder einnehmen. Die Aussage, daß die erhaltene Form "im wesentlichen" beibehalten werden muß, bedeutet, daß keine Verkürzung der Länge und Breite von mehr als etwa 10% eintreten darf, sobald die Dehnkraft nicht mehr einwirkt. Natürlich behalten die erfindungsgemäßen Laminate die nach Verdehnung erhaltene Form auch dann im wesentlichen bei, wenn die Verdehnung unter 150% liegt.
In einer vorteilhaften Ausführungsform weisen die erfindungsgemäßen Laminate eine Dehnbarkeit in Längs- und in Querrichtung von 250 bis 400% auf. Speziell im Fall der Herstellung von Handschuhen ist häufig eine höhere Dehnbarkeit als 150% erforderlich.

Die Folie in den erfindungsgemäßen Laminaten kann relativ dünn sein, da die zusätzliche Verwendung von Gewebe oder Gewirke zur mechanischen Festigkeit beiträgt. Die Verwendung dünner Folien bewirkt, daß Wasserdampf schneller von der Haut des Trägers an die Umgebung abgegeben werden kann. Vorzugsweise ist die Folie zwischen 5 und 50 µm, insbesondere zwischen 10 und 25 µm dick.

Für die Endlosfäden, aus denen das Gewebe oder Gewirke der erfindungsgemäßen Laminate besteht, lassen sich im Prinzip beliebige Materialien verwenden, welche zu den erforderlichen Dehnungseigenschaften führen. Vorzugsweise werden hierfür synthetische organische Polymere verwendet, insbesondere Polyester wie Polyäthylenterephthalat oder Polybutylenterephthalat, Polyamid 6 oder 66, Copolyamide, oder Polyolefine wie Polypropylen.

Das Material, aus dem die atmungsaktive Folie besteht, kann ebenfalls aus einer Reihe bekannter Materialien ausgewählt werden, wie sie in den eingangs genannten Druckschriften beschrieben sind. Voraussetzung ist hier wiederum, daß die genannten Dehnungs- und Rückstelleigenschaften erreicht werden. Bevorzugt für das Folienmaterial sind Polyurethane Polyolefine und Copolyätherester. Besonders günstige Eigenschaften werden durch die Verwendung eines Copolyesters erzielt, der aus einer Vielzahl von wiederkehrenden intralinearen langkettigen Estereinheiten und kurzkettigen Estereinheiten besteht, die statistisch Kopfende-an-Hinterende durch Esterbrücken verbunden sind, wobei die langkettigen Estereinheiten der Formel

$$\{O\text{-}G\text{-}O\text{-}\overset{\overset{O}{\|}}{C}\text{-}R\text{-}\overset{\overset{O}{\|}}{C}\}$$

wobei die kurzkettigen Estereinheiten der Formel

$$\{O\text{-}D\text{-}O\text{-}\overset{\overset{O}{\|}}{C}\text{-}R\text{-}\overset{\overset{O}{\|}}{C}\}$$

entsprechen, worin G ein zweiwertiger Rest ist, der durch Entfernung von endständigen Hydroxylgruppen mindestens eines langkettigen Glycols entsteht, das ein Molekulargewicht im Bereich von 800 bis 6000 und ein Atomverhältnis von Kohlenstoff zu Sauerstoff im Bereich von 2,0 bis 4,3 besitzt, wobei mindestens 70 Gew.% des langkettigen Glycols ein Kohlenstoff:Sauerstoff-Verhältnis im Bereich von 2,0 bis 2,4 aufweisen, R ein zweiwertiger Rest ist, der durch Entfernung von Carboxylgruppen mindestens einer Dicarbonsäure mit einem Molekulargewicht von weniger als 300 entsteht, und D ein zweiwertiger Rest ist, welcher durch Entfernung von Hydroxylgruppen mindestens eines Diols entsteht, das ein Molekulargewicht von weniger als 250 besitzt, wobei mindestens 80 Mol% der verwendeten Dicarbonsäure aus Terephthalsäure oder einem esterbildenden Äquivalent hiervon und mindestens 80 Mol% des niedermolekularen Diols aus 1,4-Butandiol oder einem esterbildenden Äquivalent hiervon bestehen, wobei die Summe der Molprozente der Dicarbonsäure, die nicht Terephthalsäure oder deren esterbildendes Äquivalent ist, und des niedermolekularen Diols, das nicht, 1,4-Butandiol oder dessen esterbildendes Äquivalent ist, nicht größer als 20 ist und die kurzkettigen Estereinheiten 50 bis 75 Gew.-% des Copolyätheresters bilden.

Solche Copolyätherester und die Herstellung von Folien aus ihnen sind in der EP-A 0 111 360 beschrieben. Die Herstellung der Folien kann beispielsweise nach den Angaben in Kirk-Othmer, Encyclopedia of Chemical Technology 9 (1966), Seiten 232-241 erfolgen. Die in der EP-A 0 111 360 genannten speziellen Vertreter der Copolyätherester sind auch für die erfindungsgemäßen Laminate verwendbar.

Die Überprüfung, ob eine atmungsaktive Folie für die erfindungsgemäßen Laminate geeignet ist, d.h. ob sie in ausreichendem Maß wasserundurchlässig und wasserdampfdurchlässig ist, kann nach den Angaben in DIN 53 495, ASTM E 96-66 (Methode B) und nach den Angaben in der GB-PS 2 024 100 erfolgen.

Nach DIN 53 495 wird die Wasserabsorption bei 23°C gemessen, nach ASTM E 96-66 (Methode B) die Wasserdampfdurchlässigkeit bei 30°C und 50% relativer Luftfeuchtigkeit. Die wasserabweisenden Eigenschaften werden gemäß den Angaben der GB-PS 2 024 100 mit einer modifizierten Sutter-Test-Apparatur und nach dem "Mullin-Burst-Test" gemessen. Gut geeignet für die erfindungsgemäßen Laminate sind Folien, die eine Wasserdampfdurchlässigkeit von mindestens 1000, vorzugsweise mindestens 2000 $g/m^2$ . Tag und eine Wasserabsorption von nicht mehr als 17 Gew.-%, vorzugsweise von nicht mehr als 11 Gew.-% aufweisen.

In einer bevorzugten Ausführungsform der erfindungsgemäßen Laminate weisen diese auf der dem Gewebe oder Gewirke abgewandten Oberfläche der Folie thermisch aktivierbare Klebepunkte

aus einem organischen Polymeren auf. Diese Klebepunkte dienen dazu, eine punktförmige Verbindung zwischen den Laminaten und einer weiteren Schicht, z.B. der Außenlage von Schuhen oder Handschuhen, zu ermöglichen. Eine punktförmige Verklebung ist hierbei einer vollflächigen Verklebung vorzuziehen. Die Klebepunkte aus einem organischen Polymeren sind thermisch aktivierbar, d.h. sie können bei erhöhter Temperatur, vorzugsweise im Bereich von 100 bis 180°C, erweichen. Beim Wiedererkalten erstarren die Klebepunkte und schaffen so eine Klebeverbindung zwischen Laminat und Schuh- oder Handschuhaußenlage. Gegebenenfalls kann die Verklebung bei erhöhter Temperatur durch Anwendung eines leichten bis mittleren Anpreßdrucks unterstützt werden. Geeignet als Material für die Klebepunkte sind organische Polymere mit niedrigem Erweichungspunkt, z.B. im Bereich von 100 bis 180°C. Solche thermoplastische Polymere als solche sind bekannt, typische Vertreter sind Copolyester oder Copolyamide. Die Klebepunkte können nach bekannten Techniken auf die Folienseite der erfindungsgemäßen Laminate aufgebracht werden, z.B. durch Siebdruck.

Die erfindungsgemäßen Laminate können in vorteilhafter Weise als Ausgangsmaterial für eine Zwischenschicht für Schuhe oder Handschuhe verwendet werden, welche außerdem eine Außenschicht und eine Innenschicht aufweisen. Aus der Verwendung der Laminate als Ausgangsmaterial für die Zwischenschicht resultieren die oben beschriebenen Vorteile bezüglich Fertigung und Artikeleigenschaften. Vielfach bestehen hierbei die Außenschicht und die Innenschicht der Schuhe oder Handschuhe unabhängig voneinander aus Leder oder einem textilen Flächengebilde, wie z.B. einem Gewebe. Außenlagen aus textilen Flächengebilden kommen beispielsweise bei Turn-oder Sportschuhen in Frage. Innenschichten bzw. Innenlagen aus textilen Flächengebilden können bekannte Futterstoffe sein. In vielen Fällen besteht die Außenlage von Schuhen oder Handschuhen aus Leder wegen dessen Trage- und ästhetischer Eigenschaften.

Bevorzugt wird die Zwischenlage, die aus den erfindungsgemäßen Laminaten hergestellt wird, in den Schuhen oder Handschuhen so angebracht, daß die Folie der Außenlage und das Gewebe oder Gewirke der Innenlage zugewandt ist. Die Innenlage ist hierbei die der Hand oder dem Fuß zugekehrte Seite des Schuhs oder Handschuhs. Wenn die Folie der Außenlage benachbart ist, entsteht eine wirksame Barriere gegen das Eindringen von Wasser, z.B. bei Regen, in das textile Gewebe oder Gewirke des Laminats. In einer vorteilhaften Ausführungsform ist hierbei das erfindungsgemäße Laminat mit der Außenlage punktförmig über die beschriebenen Klebepunkte verbunden und an den Außenrändern vernäht.

In den Zwischenschichten der fertigen Schuhe oder Handschuhe liegen die erfindungsgemäßen Laminate normalerweise nicht in ihrer ursprünglichen Form vor, da bei der Schuh- bzw. Handschuhherstellung in Folge der Formgebung, z.B. über Leisten, eine irreversible Verdehnung auftritt. Die Zwischenschichten der Fertigartikel weisen daher im Normalfall kleinere Werte für die Dehnbarkeit auf als die erfindungsgemäßen Laminate, die als Ausgangsmaterial für die Zwischenschicht dienen.

Die Erfindung wird nachfolgend durch ein Ausführungsbeispiel veranschaulicht. Die hierbei verwendete (handelsübliche) Sympatex ®-Folie besteht aus einem Copolyätherester gemäß Anspruch 6 und wurde nach dem in der EP-A 0 111 360 angegebenen Verfahren hergestellt.

## Ausführungsbeispiel:

### 1. Laminat

Aus Polyester-Filamentgarn MOY 107 dtex f36 gl pr, gesponnen mit 2000 m/min Abzugsgeschwindigkeit wurde eine einschienige Trikotwirkware hergestellt mit der Fadenzahl 11 x 207 und 23 Maschenreihen/cm. Das $m^2$-Gewicht der betrug 63 $g/m^2$. Sie wurde mit einer SYMPATEX ®-Folie (Membran) der Dicke 25 $\mu$m, entsprechend 31 $g/m^2$ unter Verwendung von ca. 10 $g/m^2$ eines Klebers zu einem Zweilagen-Laminat verarbeitet. Dabei wurde der Kleber (Polyurethan) in Ethylacetat gelöst, punktförmig auf die Membran aufgetragen, das Lösungsmittel bei 40°C abgedampft und die Membran mit Kleberpunkten bei ca. 80°C Walzentemperatur durch Kalandrieren mit der Wirkware vereinigt.

Am Laminat wurden folgende Höchstdehnungen gemessen:
längs zur Warenlaufrichtung 255%
quer zur Warenlaufrichtung 366%.

### 2. Verarbeitung

Das Laminat wurde in einer Tiefziehmaschine (der Fa. Illig) nach dem Vakuumtiefziehverfahren über einen Leisten verformt. Dabei wurde mit einer Unterhitze von 120°C über 10 s gearbeitet. Die Abkühlzeit vor Aufheben des Vakuums betrug ca. 1 min.

Erhalten wurden Formteile entsprechend der Form des Leistens, die sich nach Entfernen überstehenden Materials und Öffnen des oberen Schaftbereiches für die Verwendung als wasserdichte Schuhzwischenschicht eignen.

## Ansprüche

1. Laminat aus einem Gewebe oder Gewirke und einer wasserundurchlässigen, wasserdampfdurchlässigen Folie, dadurch gekennzeichnet, daß das Gewebe oder Gewirke aus unverstreckten oder teilverstreckten Endlosfäden besteht, daß das Laminat bei Raumtemperatur eine Dehnbarkeit in Längs- und in Querrichtung von mindestens 150% besitzt und daß es nach einer Verdehnung in Längs- und/oder Querrichtung um einen Wert zwischen 150% und der Bruchdehnung die erhaltene Form im wesentlichen beibehält.

2. Laminat nach Anspruch 1, dadurch gekennzeichnet, daß die Dehnbarkeit 250 bis 400% beträgt.

3. Laminat nach Anspruch 1 oder 2, dadurch gekennzeichnet, daß die Endlosfäden aus einem synthetischen organischen Polymermaterial bestehen.

4. Laminat nach Anspruch 3, dadurch gekennzeichnet, daß die Endlosfäden aus Polyester, Polyamid oder Polypropylen bestehen.

5. Laminat nach einem oder mehreren der Ansprüche 1 bis 4, dadurch gekennzeichnet, daß die wasserdampfdurchlässige wasserundurchlässige Folie aus Polyurethan, Polyolefin oder aus einem Copolyätherester besteht.

6. Laminat nach Anspruch 5, dadurch gekennzeichnet, daß die Folie aus einem Copolyätherester besteht, der aus einer Vielzahl von wiederkehrenden intralinearen langkettigen Estereinheiten und kurzkettigen Estereinheiten besteht, die statistisch Kopfende-an-Hinterende durch Esterbrücken verbunden sind, wobei die langkettigen Estereinheiten der Formel

$$\{O-G-O-\overset{O}{\overset{\|}{C}}-R-\overset{O}{\overset{\|}{C}}\}$$

wobei die kurzkettigen Estereinheiten der Formel

$$\{O-D-O-\overset{O}{\overset{\|}{C}}-R-\overset{O}{\overset{\|}{C}}\}$$

entsprechen, worin G ein zweiwertiger Rest ist, der durch Entfernung von endständigen Hydroxylgruppen mindestens eines langkettigen Glycols entsteht, das ein Molekulargewicht im Bereich von 800 bis 6000 und ein Atomverhältnis von Kohlenstoff zu Sauerstoff im Bereich von 2,0 bis 4,3 besitzt, wobei mindestens 70 Gew.% des langkettigen Glycols ein Kohlenstoff:Sauerstoff-Verhältnis im Bereich von 2,0 bis 2,4 aufweisen, R ein zweiwertiger Rest ist, der durch Entfernung von Carboxylgruppen mindestens einer Dicarbonsäure mit einem Molekulargewicht von weniger als 300 entsteht, und D ein zweiwertiger Rest ist, welcher durch Entfernung von Hydroxylgruppen mindestens eines Diols entsteht, das ein Molekulargewicht von weniger als 250 besitzt, wobei mindestens 80 Mol% der verwendeten Dicarbonsäure aus Terephthalsäure oder einem esterbildenden Äquivalent hiervon und mindestens 80 Mol% des niedermolekularen Diols aus 1,4-Butandiol oder einem esterbildenden Äquivalent hiervon bestehen, wobei die Summe der Molprozente der Dicarbonsäure, die nicht Terephthalsäure oder deren esterbildendes Äquivalent ist, und des niedermolekularen Diols, das nicht, 1,4-Butandiol oder dessen esterbildendes Äquivalent ist, nicht größer als 20 ist und die kurzkettigen Estereinheiten 50 bis 75 Gew.-% des Copolyätheresters bilden.

7. Laminat nach einem oder mehreren der Ansprüche 1 bis 6, dadurch gekennzeichnet, daß die Dicke der Folie einen Wert zwischen 5 und 50 µm besitzt.

8. Laminat nach Anspruch 7, dadurch gekennzeichnet, daß die Dicke der Folie einen Wert zwischen 10 und 25 µm besitzt.

9. Laminat nach einem oder mehreren der Ansprüche 1 bis 8, dadurch gekennzeichnet, daß sich auf der dem Gewebe oder Gewirke abgewandten Oberfläche der Folie thermisch aktivierbare Klebepunkte aus einem organischen Polymeren befinden.

10. Verwendung eines Laminats nach einem oder mehreren der Ansprüche 1 bis 9 zur Herstellung von Schuhen oder Handschuhen, welche eine Außenschicht, eine Zwischenschicht und eine Innenschicht aufweisen, wobei das Laminat als Ausgangsmaterial für die Zwischenschicht dient.

11. VVerwendung nach Anspruch 10, dadurch gekennzeichnet, daß die Außen- und Innenschicht unabhängig voneinander aus Leder oder einem textilen Flächengebilde bestehen.

12. Verwendung nach Anspruch 10 oder 11, dadurch gekennzeichnet, daß die Folienseite der Zwischenschicht der Außenlage zugewandt ist.

13. Verwendung nach Anspruch 12, dadurch gekennzeichnet, daß die Zwischenschicht mit der Außenschicht durch thermisch aktivierbare Klebepunkte verbunden ist.

Europäisches Patentamt

# EUROPÄISCHER RECHERCHENBERICHT

Nummer der Anmeldung

EP 89 10 6242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 110 627 (W.L. GORE & ASSOCIATES, INC.) * Zusammenfassung; Seite 9, Zeilen 7-14; Seite 9, Zeilen 22-25; Anspruch 5 * | 1,2,10, 11,3 | B 32 B 5/22<br>B 32 B 27/12<br>D 06 N 3/12 |
| A | EP-A-0 111 360 (AKZO N.V.) * Zusammenfassung; Seite 10, Zeilen 25-27; Anspruch 3 * | 3-8 | |
| A | FR-A-2 522 587 (P. CARDIS) * Seite 4, Zeilen 37-40; Ansprüche 1,2 * | 1,10,12 ,13 | |

RECHERCHIERTE SACHGEBIETE (Int. Cl.4)

B 32 B

Der vorliegende Recherchenbericht wurde für alle Patentansprüche erstellt

| Recherchenort | Abschlußdatum der Recherche | Prüfer |
|---|---|---|
| DEN HAAG | 06-07-1989 | MCCONNELL C.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)